# EUROPEAN PATENT APPLICATION

(11) **EP 1 927 916 A1**
(43) Date of publication of application: **04.06.2008**
(21) Application number: 07120313.7
(22) Date of filing: 09.11.2007
(51) Int. Cl.: G06F 3/01

(54) **Apparatus, method, and medium for outputting tactile feedback on display device**

(30) Priority: 29.11.2006 KR 20060119309
(71) Applicant: Samsung Electronics Co., Ltd., Suwon-si, Gyeonggi-Do (KR)
(72) Inventor: Soh, Byung-seok, Gyeonggi-do 446-712 (KR); Kim, Kyu-yong, Gyeonggi-do 446-712 (KR); Kim, Yeun-bae, Gyeonggi-do 446-712 (KR)
(74) Representative: D'Halleweyn, Nele Veerle Trees Gertrudis

(57) **Abstract**

An apparatus, method, and medium for outputting tactile feedback on a display device are provided. The apparatus includes a controller obtaining movement information of two or more vibration devices provided at edges of a vibration panel, and a vibrator vibrating the two or more vibration devices with a predetermined phase difference with a target contact location set as the vibration center point, the target contact location corresponding to a location where information on tactile feedback is to be output, based on the movement information obtained by the controller.

## Description

### CROSS-REFERENCE TO RELATED APPLICATIONS

This application claims priority benefit from Korean Patent Application No. 10-2006-0119309 filed on November 29, 2006 in the Korean Intellectual Property Office, the disclosure of which is incorporated herein by reference in its entirety.

### BACKGROUND

### 1. Field

Embodiments relate to an apparatus, method, and medium for outputting tactile feedback on a display device. More particularly, embodiments relate to an apparatus, method, and medium for outputting tactile feedback on a display device, by which a location currently pointed by a user can be identified by transmitting tactile feedback to a user's tactile input to an image display device, and which can warn or inform a user of the location of his/her fingertip.

### 2. Description of the Related Art

In general, haptic technology is classified into force feedback using kinesthetic information, tactile feedback using tactile information, and thermal feedback using thermal information. Previous technology typically provided people with vibration based on kinesthetic information, as disclosed in numerous patents. For example, U.S. Patent No. 6,278,439 discloses a method and apparatus for shaping force signals for a force feedback device.

Force feedback using kinesthetic information, which provides a user with a force and feeling of motion using a mechanical interface, is common in everyday life. For example, performing a gun shot using a force-feedback game device conveys a repulsive force to the device. In the case of a car collision of a game, a vibration force is conveyed to an actual steering wheel.

Tactile feedback using tactile information is widely used for medical purposes. For example, a medical expert can administer treatment directly to the diseased part of a virtual patient while viewing a 3D anatomical structure displayed on a computer monitor in real time. Tactile sensation is conveyed to the medical expert via mechanoreceptor cells located near the surface of the skin using a device such as a small mobile pin driven by compressed air or electricity.

There are numerous related art patent documents concerning tactile feedback. One exemplary tactile-feedback technology is described in Korean Patent Publication No. 2003-082968, teaching that an actuator moving a surface of a touch panel to cause a user to feel the sense of the movement through the skin to cause an instant tactile sensation. The technology described in the Korean Patent Publication No. 2003-082968 also relates to a haptic interface for a laptop computer or other portable device, which includes different control areas for providing for separate inputs. In addition, Korean Patent Publication No. 2002-064603 discloses a tactile-type touch screen having a screen electrode which can detect a user's manipulation by feedback current applied to the touch screen, and can induce audiovisual and tactile stimulations.

While the above-described prior art documents describe touch panels subjected to substantially the same vibratory patterns or electric shocks, no recitation on the capability to inform a user of the current contact location of the touch screen or a movement direction of a fingertip prior to actual movement of the fingertip has yet been proposed.

### SUMMARY

Embodiments provide an apparatus and method for outputting tactile feedback on a display device, in which tactile feedback regarding whether a button provided on an image display device such as a touch screen is accurately pressed is provided to a user by allowing the user to feel tactile sensations by conveying tactile information to a user's fingertip when the user presses the button, thereby enabling the user to be informed of the current contact location of the touch screen.

Embodiments provide an apparatus and method for outputting tactile feedback on an image display device such as a touch screen, in which the information on a movement direction of the user's fingertip contacting the touch screen can be provided to the user prior to the user actually moving the fingertip.

According to an aspect of embodiments, there is provided an apparatus for outputting tactile feedback on a display device. The apparatus includes a controller to obtain movement information of two or more vibration devices provided at edges of a vibration panel, and a vibrator to vibrate the two or more vibration devices with a predetermined phase difference with a target contact location set as the vibration center point, the target contact location corresponding to a location where information on tactile feedback is to be output, based on the movement information obtained by the controller.

According to another aspect of the present invention, there is provided a method for outputting tactile feedback on a display device, the method including detecting information on a touch of a vibration panel for inputting a signal to the display device or information on a graphical user interface (GUI) position output on the vibration panel, analyzing the detected information to obtain information on movement of two or more vibration devices provided at edges of the vibration panel, and vibrating the two or more vibration devices with a predetermined phase difference with target contact location set as the vibration center point based on the obtained movement information the target contact location corresponding to a location where information on tactile feedback is to be output.

In an aspect, there is provided a method for outputting tactile feedback on a display device, the method including analyzing information received from a vibration panel to obtain information on movement of two or more vibration devices provided at edges of the vibration panel; and vibrating the two or more vibration devices with a predetermined phase difference with target contact location set as vibration center point based on the obtained movement information, the target contact location corresponding to a location where information on tactile feedback is to be output.

According to another aspect of the present invention, there is provided at least one computer readable medium storing computer readable instructions to implement methods of embodiments.

### BRIEF DESCRIPTION OF THE DRAWINGS

The patent or application file contains at least one drawing executed in color. Copies of this patent or patent application publication with color drawing(s) will be provided by the Office upon request and payment of the necessary fee. These and/or other aspects, features, and advantages will become apparent and more readily appreciated from the following description of the exemplary embodiments, taken in conjunction with the accompanying drawings of which:
FIG. 1 is a diagram illustrating the vibrating principle of an apparatus for outputting tactile feedback according to an exemplary embodiment;
FIG. 2 is a diagram illustrating vibration output from the apparatus for outputting tactile feedback according to an exemplary embodiment;
FIG. 3 is a diagram illustrating vibration output from an apparatus for outputting tactile feedback according to another exemplary embodiment;
FIG. 4A is a cross-sectional view of a display device according to an exemplary embodiment;
FIG. 4B is a plan view of the display device according to an exemplary embodiment;
FIG. 5 is a schematic block diagram of an apparatus for outputting tactile feedback according to an exemplary embodiment; and
FIG. 6 is a flowchart illustrating sequences of a method of outputting tactile feedback according to an exemplary embodiment;

### DETAILED DESCRIPTION OF EMBODIMENTS

Reference will now be made in detail to exemplary embodiments, examples of which are illustrated in the accompanying drawings, wherein like reference numerals refer to the like elements throughout. Exemplary embodiments are described below to explain the present invention by referring to the figures.

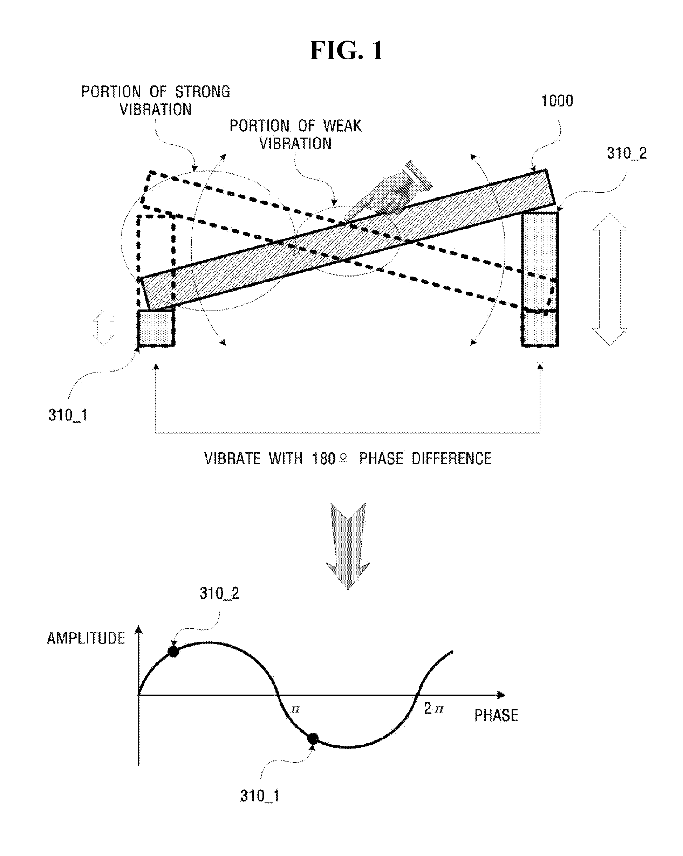

FIG. 1 is a diagram illustrating the vibrating principle of an apparatus for outputting tactile feedback according to an exemplary embodiment.

An image display device to which embodiments can be applied may generally be a touch screen that allows a user to directly enter commands through a touch panel provided thereon, but embodiments are not limited thereto. Rather, embodiments can also be applied to a general liquid crystal display (LCD) or plasma display panel (PDP) which can be adapted for tactile feedback. In the following, however, exemplary embodiments will be described with regard to a display device having a touch panel to which a user's command can be directly input using a fingertip.

Referring to FIG. 1, the apparatus for outputting tactile feedback according to an exemplary embodiment includes a vibration panel 1000 and vibration devices 310_1 and 310_2 firmly supporting the vibration panel 1000 from edges of the bottom of the vibration panel 1000. The vibration panel 1000 may include both a display panel that displays an image and a touch panel that is disposed on the display panel and senses a user's touch, or may include only the display panel. In other words, the vibration panel 1000 may cover a panel capable of vibration forces irrespective of whether or not a touch panel is provided in the vibration panel 1000.

When a user touches the vibration panel 1000 in order to input a command, the vibration devices 310_1 and 310_2 disposed at both ends of the vibration panel 1000 move up and down in view of a contact location as the center of vibration with a predetermined phase difference. Generally, the vibration devices 310_1 and 310_2 are preferably actuated for vibration with a 180° phase difference. That is, if the vibration device 310_1, i.e., the left vibration device, has negative amplitude, denoting that the vibration device 310_1 moves downward, the vibration device 310_2, i.e., the right vibration device, will have a positive amplitude, denoting that the vibration device 310_2 moves upward. Here, the vibration sensed in the proximity of the user's contact location is relatively weak, while the vibration sensed far from the user's contact location is relatively strong. Accordingly, tactile information can be fed back to a display panel and conveyed through to a user's fingertip.

The phase difference is not limited to 180°, and may fall under a coverage range in which tactile feedback can be provided between vibration devices to exhibit the critical effect of exemplary embodiments.

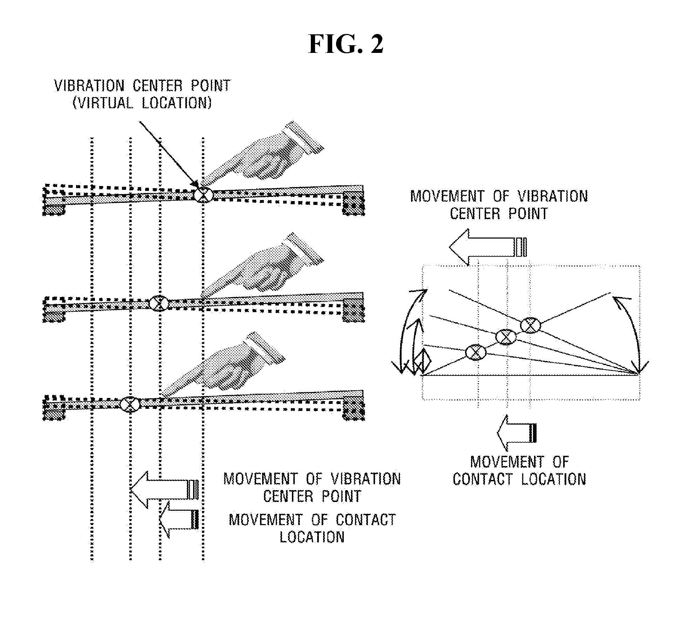

FIG. 2 is a diagram illustrating vibration output from the apparatus for outputting tactile feedback according to an exemplary embodiment. Referring to FIG. 2, when a user contacts a particular location of a vibration panel 1000 in order to input a command using a fingertip, a virtual vibration center point is generated around the contact location. In this state, the user may have to drag and move the fingertip to another location in order to input a new command. However, it is often the case that dragging to a target location may not be accurately found, and, even when found, the target location may not be accurately pointed to by the user. To avoid this, it is necessary to warn or inform the user of a target location to which the user's fingertip is to move. FIG. 2 illustrates that the position of the vibration center point as the target location is moved according to the movement of the user's fingertip, and the vibration center point is moved temporally prior to movement of the contact location, so that the user can be informed of the target position of the fingertip to be moved prior to the movement of the fingertip. That is to say, the contact location lags behind the vibration center point.

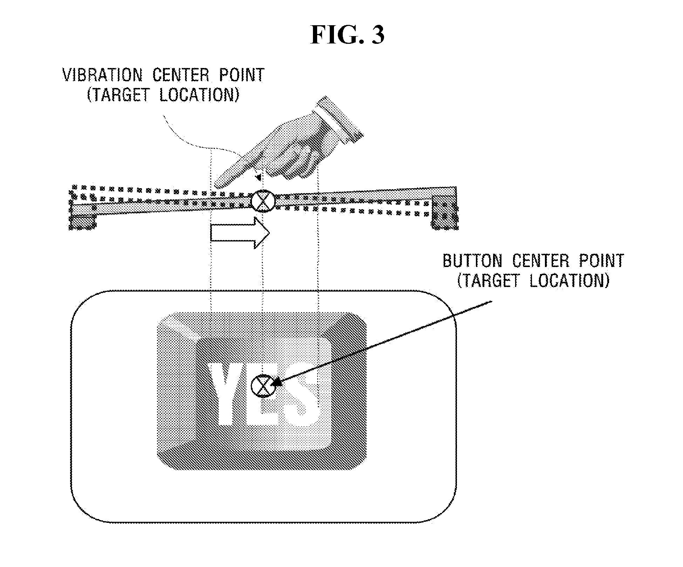

FIG. 3 is a diagram illustrating vibration output from an apparatus for outputting tactile feedback according to another exemplary embodiment. When a particular button or icon is not accurately touched in a mobile device having a small display screen area, an input error may be generated. In some cases, it is necessary to inform a user of the position of an input button implemented by graphic user interface (GUI) displayed on a program run prior to user's tactile input. To this end, as shown in FIG. 3, a vibration device is vibrated around the center point of a particular button or icon displayed by GUI as a virtual vibration center point, thereby providing the user with feedback regarding the position of a target contact location. In other words, since it is detected through his/her fingertip that the magnitude of vibration is weaker at the center point of a particular button or icon than at the other locations, the user can be informed prior to moving his/her fingertip of the location of a target input button or icon.

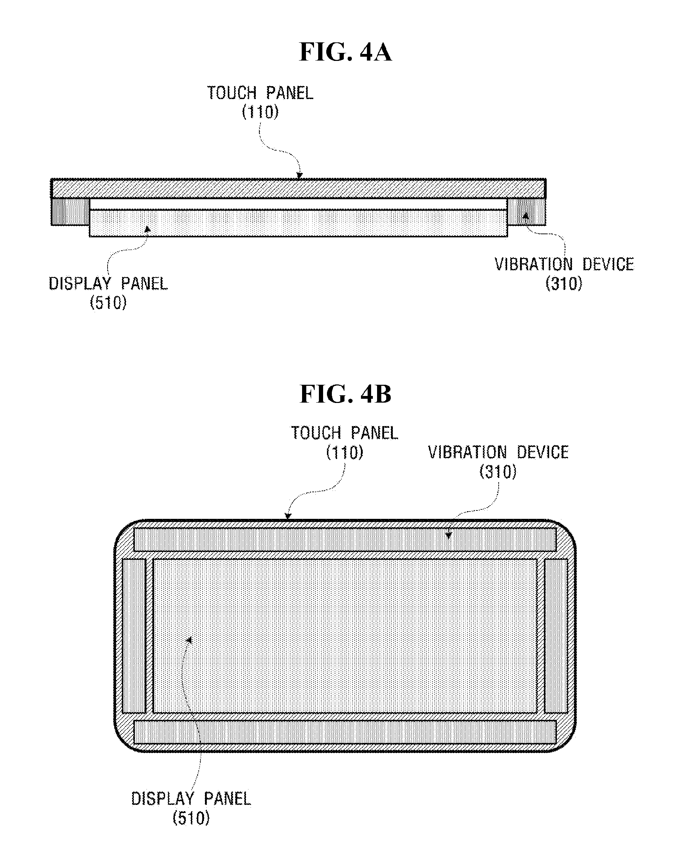

FIG. 4A is a cross-sectional view of a display device according to an exemplary embodiment, and FIG. 4B is a plan view of the display device according to an exemplary embodiment.

Referring to FIGS. 4A and 4B, the display device largely consists of a touch panel 110, a display panel 510, and a vibration device 310. The touch panel 110 is directly contacted by a user's fingertip to detect tactile information. The display panel 510 displays an image signal. The vibration device 310, which is positioned at an end of the display panel 510 and at an edge of the bottom of the touch panel 110, actuates the touch panel 110 to vibrate by a combination of upward and downward movements with a predetermined phase difference.

The touch panel 110 acquires information on an input signal created by a user's fingertip, and sensors incorporated therein include, but are not limited to, a capacitive sensor, a resistive sensor, and a pressure sensor.

The vibration device 310 may be a piezoelectric module capable of providing high frequency vibration based on electricity, and an electroactive polymer (EAP) arrayed in a fiber structure may also be employed as the vibration device 310. General properties of the piezoelectric module and the EAP are widely known in the art, and a detailed explanation thereof will not be given.

In order to vibrate the vibration device 310 using electricity, an electric circuit capable of generating a potential difference may further be provided. Then, the vibration device 310 is vibrated by converting an electrical signal generated from the electric circuit.

The term "vibration panel" used herein may encompass both the touch panel 110 sensing the tactile information input from the user and the display panel 510 displaying an image signal. Otherwise, the term "vibration panel" may be used to denote only the touch panel 110. Shapes of the touch panel 110 and the display panel 510 are not limited to rectangles, and the touch panel 110 and the display panel 510 may have arbitrary polygonal shapes or closed curves having a predetermined curvature. FIGS. 4A and 4B illustrate rectangular panels, but embodiments are not limited to the illustrated examples.

One or more vibration devices may be provided at edges of the bottom of the touch panel 110 and are spaced apart from each other at a constant distance. Referring to FIG. 4B, each one vibration device is provided at each edge of the rectangular touch panel 110. However, a vibration device may be provided at each edge of the rectangular touch panel 110. In this case, a particular one among the two or more vibration devices vibrates with a predetermined phase difference with respect to another vibration device positioned at the opposite edge where the particular vibration device is positioned, thereby effectuating the tactile feedback according to exemplary embodiments.

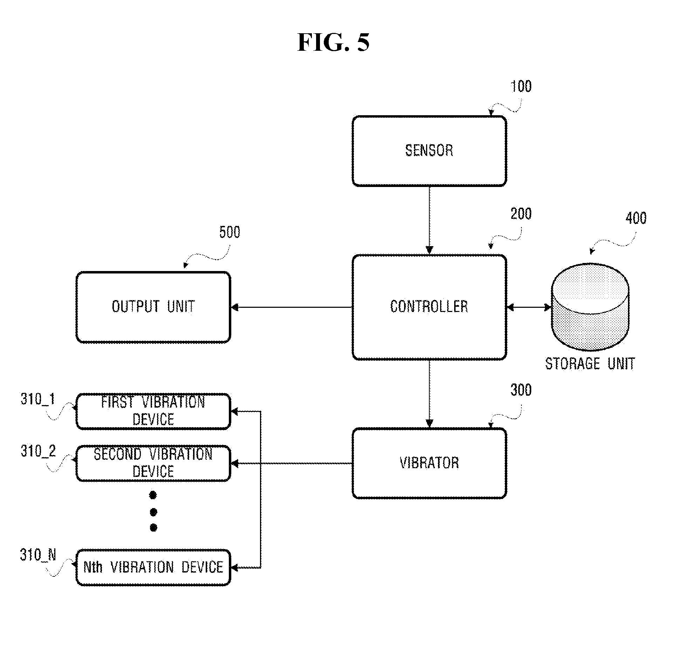

FIG. 5 is a schematic block diagram of an apparatus for outputting tactile feedback according to an exemplary embodiment. Referring to FIG. 5, the apparatus for outputting tactile feedback according to an exemplary embodiment includes a sensor 110, a controller 200, a vibrator 300, a storage unit 400, and an output unit 500.

The sensor 100 detects information on a touch of a vibration panel for inputting a signal to an image display device or information on a GUI position output on the vibration panel, which is displayed prior to user's tactile input. Here, the information on the touch of the vibration panel may include information on the contact location, information on the strength of the touch, and tactile information on the contact location.

As illustrated in FIGS. 4A and 4B, the sensor 100 may be implemented by the display panel 510 and the touch panel 110 covering two or more vibration devices 310_1 to 310_N provided at edges of the display panel 510.

The controller 200 analyzes the information detected by the sensor 100, that is, the information on the position of a contact location, the information on the strength of the touch, and the tactile information on the contact location, and obtains movement information of the vibration devices 310_1 to 310_N.

Here, the movement information may include amplitude of vibration frequency of each vibration device, strength of vibration, a magnitude of phase, position information of a vibration center point between each of the vibration devices positioned opposite to each other in view of the target location, and so on. The phase difference between each of the vibration devices positioned opposite to each other in view of the target location is preferably maintained at about 180°. In this case, the vibration sensed between the opposite vibration devices is weaker than that sensed in the proximity of each of the vibration devices.

Based on the movement information obtained by the controller 200, the vibrator 300 vibrates the two or more vibration devices 310_1 to 310_N with a predetermined phase difference with the contact location set as the vibration center point. Here, the practical range of the phase difference may fall under a coverage range in which tactile feedback regarding the current contact location or a dragging target location can be provided to a user between vibration devices, and is not limited to 180°, as described above.

The storage unit 400 stores the information detected by the sensor 100 and the movement information obtained by the controller 200, and may provide the information stored therein under the control of the controller 200.

When the contact location is moved according to the movement of the user's fingertip contacting the vibration panel, the controller 200 may control the vibrator 300 to move the vibration center point temporally prior to the movement of the contact location, thereby informing the user of the target location of the user's fingertip to be moved, which has been described in detail above with reference to the exemplary embodiment illustrated in FIG. 2 and a detailed explanation thereof will not be given.

When the contact location is not identical with the target location of the GUI displayed on the image display device, the controller 200 may control the vibration devices 310_1 to 310_N so as to allow the vibrator 300 to vibrate with the contact location set as the vibration center point, which has been described in detail above with reference to the exemplary embodiment illustrated in FIG. 3, and a detailed explanation thereof will not be given.

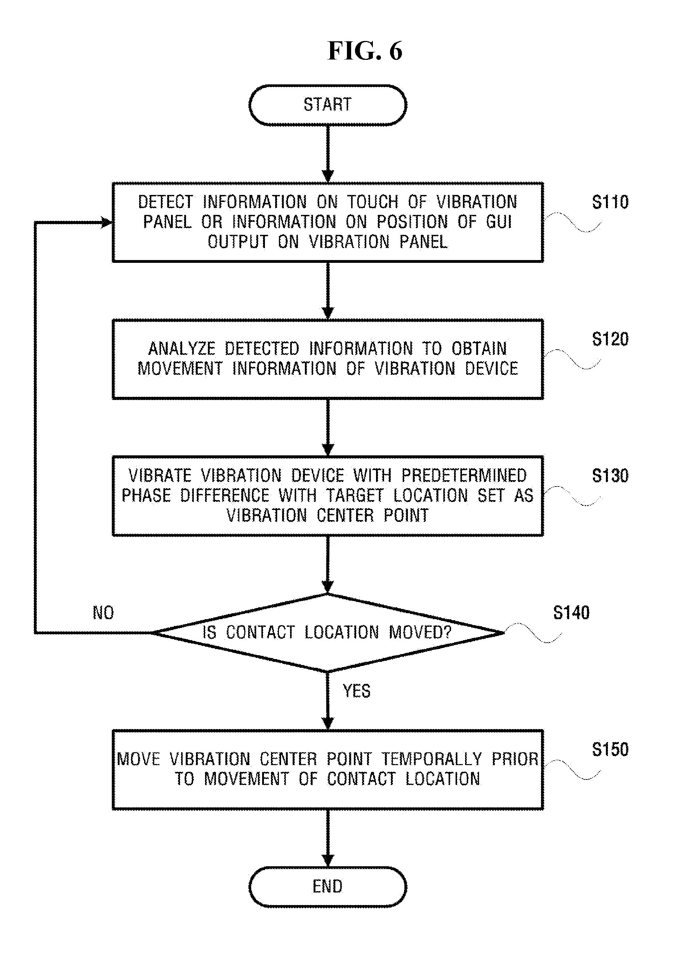

FIG. 6 is a flowchart illustrating sequences of a method of outputting tactile feedback according to an exemplary embodiment.

Referring to FIG. 6, information on a touch of a vibration panel for inputting a signal to an image display device or information on a GUI position output on the vibration panel, which is detected by the sensor 100, is input in step S110.

In S120, the information detected by the sensor 110 is analyzed by the controller 200 to obtain information on movement of the two or more vibration devices 310_1 to 310_N provided at edges of the display panel 510.

Based on the obtained movement information, the vibration devices 310_1 to 310_N are vibrated with a predetermined phase difference, preferably 180°, with the target contact location set as the vibration center point in step S130.

In S140, the controller 200 determines whether the contact location input through user's fingertip is moved If it is determined that the contact location is not moved (if the answer is "NO", the procedure goes back to step S110). If it is determined that the contact location is moved, the vibration center point is moved temporally prior to the movement of the contact location in step S150. In such a manner, the user can be informed of the target location of the user's fingertip to be moved prior to actually moving.

In addition to the above-described exemplary embodiments, exemplary embodiments can also be implemented by executing computer readable code/instructions in/on a medium/media, e.g., a computer readable medium/media. The medium/media can correspond to any medium/media permitting the storing and/or transmission of the computer readable code/instructions. The medium/media may also include, alone or in combination with the computer readable code/instructions, data files, data structures, and the like. Examples of code/instructions include both machine code, such as produced by a compiler, and files containing higher level code that may be executed by a computing device and the like using an interpreter. In addition, code/instructions may include functional programs and code segments.

The computer readable code/instructions can be recorded/transferred in/on a medium/media in a variety of ways, with examples of the medium/media including magnetic storage media (e.g., floppy disks, hard disks, magnetic tapes, etc.), optical media (e.g., CD-ROMs, DVDs, etc.), magneto-optical media (e.g., floptical disks), hardware storage devices (e.g., read only memory media, random access memory media, flash memories, etc.) and storage/transmission media such as carrier waves transmitting signals, which may include computer readable code/instructions, data files, data structures, etc. Examples of storage/transmission media may include wired and/or wireless transmission media. The medium/media may also be a distributed network, so that the computer readable code/instructions are stored/transferred and executed in a distributed fashion. The computer readable code/instructions may be executed by one or more processors. The computer readable code/instructions may also be executed and/or embodied in at least one application specific integrated circuit (ASIC) or Field Programmable Gate Array (FPGA).

In addition, one or more software modules or one or more hardware modules may be configured in order to perform the operations of the above-described exemplary embodiments.

The term "module", when used in connection with execution of code/instructions herein, denotes, but is not limited to, a software component, a hardware component, a plurality of software components, a plurality of hardware components, a combination of a software component and a hardware component, a combination of a plurality of software components and a hardware component, a combination of a software component and a plurality of hardware components, or a combination of a plurality of software components and a plurality of hardware components, which performs certain tasks. A module may advantageously be configured to reside on the addressable storage medium/media and configured to execute on one or more processors. Thus, a module may include, by way of example, components, such as software components, application specific software components, object-oriented software components, class components and task components, processes, functions, operations, execution threads, attributes, procedures, subroutines, segments of program code, drivers, firmware, microcode, circuitry, data, databases, data structures, tables, arrays, and variables. The functionality provided for in the components or modules may be combined into fewer components or modules or may be further separated into additional components or modules. Further, the components or modules can operate at least one processor (e.g. central processing unit (CPU)) provided in a device. In addition, examples of a hardware components include an application specific integrated circuit (ASIC) and Field Programmable Gate Array (FPGA). As indicated above, a module can also denote a combination of a software component(s) and a hardware component(s). These hardware components may also be one or more processors.

The computer readable code/instructions and computer readable medium/media may be those specially designed and constructed for the purposes of embodiments, or they may be of the kind well-known and available to those skilled in the art of computer hardware and/or computer software.

The apparatus, method, and medium for outputting tactile feedback on a display device may provide at least one of the following advantages.

First, since tactile feedback regarding whether a button provided on an image display device such as a touch screen is accurately pressed is provided to a user by allowing the user to feel tactile sensations by conveying tactile information to a user's fingertip when the user presses the button, the user can be informed of the current contact location of the touch screen.

In addition, the information on a movement direction of the user's fingertip contacting an image display device such as a touch screen can be provided to the user prior to the user actually moving his/her finger.

Although a few exemplary embodiments have been shown and described, it would be appreciated by those skilled in the art that changes may be made in these exemplary embodiments, the scope of embodiments being defined in the claims and their equivalents.

## Claims

1. An apparatus for outputting tactile feedback on a display device, the apparatus comprising:
a controller to obtain movement information of two or more vibration devices provided at edges of a vibration panel; and
a vibrator to vibrate the two or more vibration devices with a predetermined phase difference with a target contact location set as the vibration center point, the target contact location corresponding to a location where information on tactile feedback is to be output, based on the movement information obtained by the controller.

2. The apparatus of claim 1, further comprising:
a sensor to detect information on a touch of the vibration panel for inputting a signal to the display device or information on a graphical user interface (GUI) position output on the vibration panel, wherein the controller analyzes the information detected by the sensor and obtains the movement information.

3. The apparatus of claim 2, wherein the information on the touch of the vibration panel includes information on the position of a contact location, information on the strength of the touch, and tactile information on the contact location.

4. The apparatus of claim 2, wherein the vibration panel has an arbitrary polygonal shape or a closed curve having a predetermined curvature.

5. The apparatus of claim 4, wherein the movement information includes the amplitude of the vibration frequency of each of the two or more vibration devices, strength of vibration, magnitude of phase, and position information of a vibration center point between each of the vibration devices positioned opposite to each other in view of the target location.

6. The apparatus of claim 1, wherein the phase difference between each of the vibration devices positioned opposite to each other in view of the target location is maintained at about 180°.

7. The apparatus of claim 1, wherein the vibration panel comprises a display panel that displays an image, and a touch panel that is disposed on the display panel and that senses a user's touch, wherein the two or more vibration devices are formed by a piezoelectric module.

8. The apparatus of claim 2, wherein the controller controls the vibrator to move the vibration center point temporally prior to the movement of the contact location to inform the user of the target location for the user's fingertip.

9. The apparatus of claim 2, wherein when the contact location is not identical with the target location of the GUI displayed on the display device, the controller controls the two or more vibration devices so as to allow the vibrator to vibrate with the contact location set as the vibration center point.

10. The apparatus of claim 2, further comprising a storage unit to store the information detected by the sensor and the movement information obtained by the controller.

11. A method for outputting tactile feedback on a display device, the method comprising:
detecting information on a touch of a vibration panel for inputting a signal to the display device or information on a graphical user interface (GUI) position output on the vibration panel;
analyzing the detected information to obtain information on movement of two or more vibration devices provided at edges of the vibration panel; and
vibrating the two or more vibration devices with a predetermined phase difference with target contact location set as the vibration center point based on the obtained movement information, the target contact location corresponding to a location where information on tactile feedback is to be output.

12. The method of claim 11, wherein the information on the touch of the vibration panel includes information on the position of a contact location, information on the strength of the touch, and tactile information on the contact location.

13. The method of claim 12, wherein the vibration panel has an arbitrary polygonal shape or a closed curve having a predetermined curvature.

14. The method of claim 11, wherein the movement information includes the amplitude of the vibration frequency of each of the two or more vibration devices, strength of vibration, a magnitude of phase, and position information of a vibration center point between each of the vibration devices positioned opposite to each other in view of the target location.

15. The method of claim 11, wherein the phase difference between each of the vibration devices positioned opposite to each other in view of the target location is maintained at about 180°.

16. The method of claim 11, wherein the vibrating of the two or more vibration devices comprises controlling the vibrator to move the vibration center point temporally prior to the movement of the contact location to inform the user of the target location to move the finger of the user.

17. The method of claim 11, wherein when the contact location is not identical with the target location of the GUI displayed on the display device, the vibrating of the two or more vibration devices comprises controlling the two or more vibration devices so as to allow the vibrator to vibrate with the contact location set as the vibration center point.

18. The method of claim 11, further comprising storing the detected information and the obtained movement information.

19. At least one computer readable medium storing computer readable instructions that control at least one processor to implement the method of claim 11.

20. A method for outputting tactile feedback on a display device, the method comprising:
analyzing information received from a vibration panel to obtain information on movement of two or more vibration devices provided at edges of the vibration panel; and
vibrating the two or more vibration devices with a predetermined phase difference with target contact location set as vibration center point based on the obtained movement information, the target contact location corresponding to a location where information on tactile feedback is to be output.

21. At least one computer readable medium storing computer readable instructions that control at least one processor to implement the method of claim 20.
